# EUROPÄISCHE PATENTSCHRIFT

(11) **EP 2 394 860 B1**
(45) Veröffentlichungstag und Bekanntmachung des Hinweises auf die Patenterteilung: **06.04.2016**
(21) Anmeldenummer: 11004779.2
(22) Anmeldetag: 10.06.2011
(51) Int. Cl.: B60R 13/08

(54) **Verkleidungsbauteil für den Innenraum eines Kraftfahrzeuges**
Cladding component for the interior of a motor vehicle
Composant d'habillage pour l'espace intérieur d'un véhicule automobile

(30) Priorität: 10.06.2010 DE 102010017321
(43) Veröffentlichungstag der Anmeldung: 14.12.2011
(73) Patentinhaber: International Automotive Components Group GmbH, 40472 Düsseldorf (DE)
(72) Erfinder: Buchheit, Jürgen, 47804 Krefeld (DE); Hoffmann, Manfred, 47804 Krefeld (DE); Rezek, Rüdiger, 47804 Krefeld (DE); Kliwer, Carsten, 47804 Krefeld (DE); Weber, Karl-Heinz, 47804 Krefeld (DE)
(74) Vertreter: Liesegang, Eva

(56) Entgegenhaltungen:
- EP-A1- 0 683 480
- WO-A1-01/58722
- WO-A1-99/61284
- FR-A1- 2 859 229

## Beschreibung

Die Erfindung betrifft ein Verkleidungsbauteil für den Innenraum eines Kraftfahrzeuges, gemäß den Oberbegriffen von Patentanspruch 1. Ein derartiges Bauteil ist zum Beispiel aus der WO99/6128 A1 bekannt.

In kleinen Nutzfahrzeugen, wie Kleinlastwagen und Transportern, weist der Ladeboden häufig einen trittfesten Belag auf, der unmittelbar auf dem Karosserieblech aufliegt. Dieser Bodenbelag ist in der Regel ein flächiges, nur wenig verformtes Bauteil, von dem Druck- und Trittfestigkeit und hohe Schalldämmung bei niedrigem Flächengewicht gefordert wird. Im Stand der Technik werden hierfür z.B. hinterschäumte Teppiche auf der Basis von PU-Schaum verwendet. Bei der Wahl und Einstellung des Materials muss ein Kompromiss gefunden werden zwischen ausreichender Härte zur Erzeugung der gewünschten Belastbarkeit und eines festen Trittgefühls sowie einer ausreichend akustischen Dämpfung, die ein weicheres Material erfordert. Die für die Abstützung hoher Lasten erforderlichen harten Körper sind in der Regel akustisch nicht oder nicht ausreichend wirksam und erzeugen nicht die gewünschte Schalldämmung.

Aus der DE 41 31 394 C2 ist ein Schalldämmmaterial bekannt, mit einer Kernschicht, die eine Wabenstruktur aus poröser Pappe aufweist und mit wenigstens einer Deckschicht aus einem luftdurchlässigen Faservlies. Die Hohlräume der Wabenstruktur sind mit einem schalldämmenden Rezyklat aus Polyurethan-Schaum, Textilfasern oder Blähglas gefüllt. Das Schalldämmmaterial dient z.B. als Seitenwandabdeckung, Kofferraum- oder Hutablagenabdeckung, Bodenabdeckung des Fahrgastraums, Türverkleidung etc., also in Bereichen, in denen es keiner nennenswerten Druckbelastung ausgesetzt ist.

Die DE 102 55 039 A1 beschreibt ein Verbundstoffformteil für Innenverkleidungen oder Abdeckungen von Kraftfahrzeugen mit einer hohlraumbildenden Kernlage, die zwischen zwei Schichten eines Naturfaser/Thermoplast-Verbundwerkstoffs angeordnet ist. Die Kernlage ist durch die beiden Deckschichten luftdicht verschlossen. Ähnliche Sandwichbauteile mit einem Kernmaterial aus Papierwabe, das beidseits mit einem Glasgewebe abgedeckt und mit einem PUR-Hartschaum beschichtet ist, sind auf dem Markt verfügbar. Diese Sandwichbauteile werden in Formwerkzeugen verpresst und ausreagiert, um leichte steife Platten mit geschlossener Oberfläche zu erhalten, die in Kraftfahrzeugen als gut belastbare Trägerwerkstoffe eingesetzt werden. Sie haben keine nennenswerten Schalldämmeigenschaften. Die Verwendung einer solchen Konstruktion für den Ladeboden eines Kraftfahrzeuges ist beispielsweise in der DE 103 10 368 A1 beschrieben.

In der DE 103 17 670 A1 ist ein Hohlkammerelement für Kraftfahrzeuge beschrieben, das eine Wabenplatte als Armierung verwendet, die mit einem Kunststoffschaum ummantelt ist. Die Wabenplatte ist beidseits mit einer Schaumschicht versehen, deren Fasern in die Hohlkammern eindringen, um eine gewisse Schalldämmung zu erreichen.

Die DE 197 02 581 A1 beschreibt ein Innenverkleidungselement für die Karosserie eines Fahrzeugs mit einer Trägerschicht aus Wellpappe, deren wabenförmige Hohlräume ausgeschäumt sind, um die gewünschte Formstabilität und Schalldämmung zu erhalten.

Die JP-2009 073401 A beschreibt einen Ladeboden für ein Kraftfahrzeug mit einer Kernschicht aus getränkter Papierwabe, die beidseitig beschichtet ist.

Die US 2006/0080941 A1 beschreibt einen Bodenbelag für den Passagierraum eines Kraftfahrzeuges, der eine Kernlage mit einer Wabenstruktur aufweist, die beidseitig beschichtet sind. Durch Ausbilden kleiner Löcher in den Deckschichten wird eine gewisse Schallabsorption erreicht.

Die WO 01/92086 A1 beschreibt einen Bodenbelag für ein Kraftfahrzeug mit einer tragenden Wabenkernschicht aus imprägnierter Pappe, die beidseits mit Versteifungsschichten versehen ist, um eine Tragstruktur mit hoher Stabilität zu bilden. Auf einer Seite der Tragstruktur ist eine PU-Schaumschicht als Feder und eine Gummi- oder Latexschicht als Masse aufgebracht, um ein akustisch absorbierendes Feder-Massesystem für die Bodengruppe bereitzustellen.

Die WO 99/61284 A1 offenbart einen akustisch wirksamen Isolationsbelag für Fahrzeuge, der mit drei unterschiedlichen funktionellen Zonen aufgebaut ist. Eine erste Zone umfasst eine Deckschicht, die dem Bauteil Stabilität und Trittfestigkeit verleiht und als Masseschicht dient. Die zweite Zone besteht aus einer Vielzahl von offenen Zellen, deren Zellwände und umschlossene Luft die Funktion einer elastischen Feder übernehmen. Eine dritte Zone schafft einen Abstand zwischen der zweiten Zone und der Karosserie mit Hilfe von kleinen Abstandselementen. Die dritte Zone dient dazu, eine laterale Luftströmung zwischen den einzelnen Zellen zu erzeugen.

Die EP 1 045 775 B1 offenbart eine schall- und stoßabsorbierende Fahrzeugverkleidung mit wenigstens einer Auflageschicht, einer Zwischenschicht und einer Abdeckschicht, wobei die Zwischenschicht eine Vielzahl von nebeneinander angeordneten Hohlräumen aufweist, deren Wandung seitlich durchbrochen ist, um ein zusammenhängendes Hohlraumlabyrinth zu bilden. Zwischen der Fahrzeugverkleidung und einem zu verkleidenden Karosserieteil entsteht eine zusammenhängende Luftschicht.

Die DE 196 27 106 A1 beschreibt ein ähnlich aufgebautes schallisolierendes Einlegeteil mit einer Oberseite und einer Unterseite sowie einem Stützkörper mit mehreren sich zwischen der Oberund der Unterseite erstreckenden Aussparungen. Die Aussparungen sind durch quer verlaufende Verbindungskanäle miteinander verbunden und vollständig oder teilweise mit einem porösen Material, wie einem Vlies- oder Schaummaterial, gefüllt.

Weitere Innenverkleidungsteile mit Wabenstruktur und Schallabsorber sind beschrieben in der FR2859229 A1, der EP0683480 A1 und der WO01/58722 A1.

Der Überblick über den Stand der Technik zeigt, dass es bekannt ist, in Innenverkleidungsteilen und Bodenbelägen von Kraftfahrzeugen als Kernschicht ein Wabenstrukturelement zu verwenden, z.B. eine imprägnierte Papier- oder Pappwabe, die zur Erreichung der strukturellen Festigkeit beidseitig mit Deckschichten versehen ist. Zur Schalldämmung ist es ferner bekannt, die Hohlräume der Wabenstruktur mit einem Schaum zu füllen oder zusätzliche Schaum-Schichten auf die Tragstruktur aufzubringen. Es ist auch bekannt, eine Deckschicht nachträglich mit kleinen Löchern zu versehen, um eine gewisse Schallabsorption zu erreichen.

Ausgehend von diesem Stand der Technik ist es eine Aufgabe der Erfindung, ein Verkleidungsbauteil für den Innenraum eines Kraftfahrzeuges, insbesondere einen Bodenbelag für eine Ladefläche eines Kraftfahrzeuges anzugeben, der einfach aufgebaut ist und geringes Gewicht hat und der optimale akustische Eigenschaften und eine hervorragende Druckfestigkeit hat. Diese Aufgabe wird durch ein Verkleidungsbauteil mit den Merkmalen von Patentanspruch 1 gelöst.

Die Erfindung sieht ein Verkleidungsbauteil für den Innenraum eines Kraftfahrzeuges, insbesondere einen Bodenbelag für eine Ladefläche eines Kraftfahrzeugs vor, mit einer Kassettenprofilschicht, in der eine Vielzahl von Hohlräumen gebildet sind, die zu einer Auf- oder Anlageseite des Verkleidungsbauteils hin offen sind, und mit einer Nutzschicht, die auf der Nutzseite des Verkleidungsbauteils auf der Kassettenprofilschicht aufliegt oder mit ihr verbunden ist. Die Hohlräume der Kassettenprofilschicht sind luftgefüllt, und das Verkleidungsbauteil ist insgesamt so ausgelegt, dass die in der Kassettenprofilschicht eingeschlossenen Luftsäulen in Verbindung mit einer luftdichten Nutzschicht oder einer die Nutzseite luftdicht abschließenden Oberfläche der Kassettenprofilschicht ein akustisches Feder-Masse-System bilden. Die Erfindung löst den Konflikt zwischen den widerstreitenden Anforderungen an die hohe Belastbarkeit und Trittfestigkeit und an die gute Schalldämmung dadurch, dass sie ein akustisches Feder-Masse-System bereitstellt, in dem als Feder das Luftpolster verwendet wird, das in den nach unten offenen Hohlräumen der Kassettenprofilschicht vorhanden ist, während die Trittfestigkeit durch das Kassettenprofil an sich erreicht wird. Die Masse wird durch die Nutzschicht gebildet, über die auch der Trittkomfort eingestellt werden kann. Die an die Nutzschicht angekoppelte Kassettenprofilschicht trägt, wenn sie mit dieser mechanisch verbunden ist, ebenfalls zur akustisch wirksamen Masse bei.

Gemäß der Erfindung sind die Hohlräume der Kassettenprofilschicht nach Art einer Wabenstruktur durch Wände getrennt, die im Wesentlichen senkrecht zur Auf- oder Anlagefläche des Verkleidungsbauteils verlaufen und eine Schallausbreitung parallel zur Auf- oder Anlagefläche weitgehend verhindern. Das erfindungsgemäße Kassettenprofil ist jedoch nicht beschränkt auf eine Wabenstruktur, sondern kann Hohlräume nahezu beliebiger Form aufweisen, die zu der den Schall aufnehmenden Auf- oder Anlageseite des Verkleidungsbauteils hin offen sind. Während die Größe der Hohlräume für die akustische Funktion des Verkleidungsbauteils weniger kritisch ist, ist sie entscheidend für die Tragfähigkeit. Bei einer Bauhöhe des Verkleidungsbauteils beispielsweise von 10 bis 30 mm sollte der Durchmesser der Hohlräume bei etwa 5 bis 20 mm, beispielsweise bei ungefähr 1 cm liegen. Diese Werte dienen lediglich als Beispiel, ohne die Erfindung hierauf zu beschränken. Die Hohlräume sind auf der Auf- oder Anlageseite über ihren gesamten Durchmesser offen, also nicht beispielsweise nur punktiert. Kleinere Wabengrößen erhöhen die strukturelle Festigkeit der Kassettenprofilschicht. Naturgemäß erhöht sich bei kleineren Hohlraumgrößen auch das Gewicht des gesamten Aufbaus; ein geeigneter Kompromiss ist für den Fachmann ohne großen Aufwand ermittelbar.

Die einzelnen Hohlräume der Kassettenprofilschicht sind nach unten offen und durch ihre Seitenwände, also durch die die Hohlräume oder Waben trennenden Wände, in seitlicher Richtung voneinander getrennt. Diese Seitenwände sind nicht luftdurchlässig. Anders als bei dem oben teilweise erörterten Stand der Technik gibt es zwischen den einzelnen Hohlräumen auch keine seitlichen Verbindungskanäle und keinen Luftaustausch durch die Seitenwände der Hohlräume hindurch. Die Kassettenprofilschicht liegt unmittelbar oder unter Zwischenschaltung einer Abdeckschicht, die weiter unten noch erläutert ist, auf der Karosserie des Kraftfahrzeuges auf, so dass auch an der Unterseite der Kassettenprofilschicht kein oder im wesentlichen kein seitlicher Luftaustausch oder Luftdurchgang erfolgt. Insbesondere sind beispielsweise nicht, wie in einem Teil des oben erörterten Standes der Technik, zwischen der Kassettenprofilschicht und der Karosserie Abstandshalter vorgesehen, die eine laterale Luftströmung an der Unterseite der Kassettenprofilschicht erlauben oder unterstützen. Vielmehr liegt die Kassettenprofilschicht mit den Unterkanten der die Hohlräume trennenden Seitenwände unmittelbar oder über die zusätzliche Abdeckschicht an der Karosserie des Kraftfahrzeugs an.

In der bevorzugten Ausführung der Erfindung enthalten die Hohlräume der Kassettenprofilschicht nur Luft; d.h. sie sind nicht mit Schaum, Granulat, Fasern oder einem anderen schalldämmenden Material gefüllt. Es hat sich gezeigt, dass sehr gute schalldämmende Eigenschaften erhalten werden können, wenn die in der Kassettenprofilschicht eingeschlossene Luftsäule als sehr weiche Feder genutzt wird und so in Verbindung mit der Nutzschicht im akustischen Sinne ein leichtes wirksames Masse-Feder-System gebildet wird. Das Profil selbst erzeugt zusätzlich die gewünschte Trittfestigkeit.

In der bevorzugten Ausführungsform ist die Nutzschicht luftdicht; spezieller hat sie einen Strömungswiderstand von wenigstens 3000 Ns/m³. Die Nutzschicht kann dazu dienen, die Hohlräume der Kassettenprofilschicht auf der Nutzseite des Verkleidungsbauteils luftdicht abzuschließen. D.h., die Kassettenprofilschicht kann zunächst so aufgebaut sein, dass sie auf beiden Seiten offene Hohlräume aufweist, wobei die Hohlräume dann auf der Nutzseite des Verkleidungsbauteils durch die Nutzschicht weitgehend luftdicht abgeschlossen werden. Die Nutzschicht kann hierzu mit der Kassettenprofilschicht direkt oder über eine elastische Zwischenlage fest oder lösbar verbunden werden. Alternativ kann die Kassettenprofilschicht jedoch auch mit einseitig geschlossenen Hohlräumen hergestellt werden.

Die Kassettenprofilschicht kann aus einem schubsteifen Material, wie einer thermoplastischen oder duroplastischen Folie oder aus einem ausgerüsteten Papier, insbesondere einem getränkten Papier, hergestellt sein. Die Ausrüstung des Papiers dient sowohl der Erhöhung der Festigkeit des Papiers als auch als Schutz gegen eindringendes Wasser und Feuchtigkeit sowie Verschmutzung. Bei Verwendung von Harzen und harten Wachsen erhöht sich im besonderen Maße die Belastbarkeit eines Papierprofils gegen Feuchtigkeit und Verformung. Es kann auch eine im Handel erhältliche getränkte Papierwabe verwendet werden. Zur Imprägnierung des Papiers können z. B. Harz, Latex, Öl, Wachs oder Bitumen verwendet werden. Alternativ oder zusätzlich kann das Papier beschichtet, beträufelt oder besprüht werden.

Die Nutzschicht kann ein-, zwei- oder mehrlagig aufgebaut sein. So kann die Nutzschicht einfach aus einem elastomeren Werkstoff hergestellt sein. In einer anderen Ausführung besteht die Nutzschicht aus einem textilen Werkstoff, der einseitig porendicht beschichtet ist, oder beispielsweise aus einem Vlies; auf das eine luftdichte, insbesondere thermoplastische Folie aufgebracht ist. Allgemeiner kann die Nutzschicht, wenn sie zweilagig ist, aus einer Lage mit einem offenen oder geschlossenen textilen Aufbau oder mit einem geschlossenen thermoplastischen Aufbau, z.B. aus TPO oder TPE, und einer zweiten Schicht aus einem Misch- oder Reinvlies, das optional thermoplastisch- oder harzgebunden ist, aufgebaut sein. In Verbindung sind die beiden Schichten vorzugsweise luftundurchlässig und verhindern auch ein Durchtreten oder Durchstanzen. Die zweite Schicht dient ferner zur Einstellung des Trittgefühls.

Das erfindungsgemäße Verkleidungsbauteil ist in der Regel im Wesentlichen flächig; es dient insbesondere als Bodenbelag für eine Ladefläche von Nutzfahrzeugen oder in ähnlichen Konstellationen, in denen die An- oder Auflagefläche eine geringe dreidimensionale Verformung aufweist und weitgehend flächig ist, beispielsweise in einem Kofferraumboden. Das Verkleidungsbauteil schafft einen glatten und belastbaren Ladeboden und ist in der Lage, Unebenheiten, wie Sicken eines Bodenblechs, auszugleichen. Dieser Ausgleich erfolgt einerseits durch die Abdeckschicht und andererseits durch eine geringfügige Verformung der Kassettenprofilschicht auf der Auf- oder Anlageseite.

Das erfindungsgemäße Verkleidungsbauteil erzielt eine hervorragende Schalldämmung auch ohne Verwendung einer zusätzlichen Entkopplungsschicht z.B. aus Schaumstoff. In einer ersten aufgebaut. In einer anderen Ausführung ist es nur aus der Kassettenprofilschicht, der Nutzschicht und der Abdeckschicht aufgebaut. Weitere Materialien, insbesondere zusätzliche Schaumstoffschichten, sind nicht notwendig.

Das erfindungsgemäße Verkleidungsbauteil kann vorgefertigt werden und im zusammengebauten Zustand als Ladeboden, Innenverkleidungsteil oder dergleichen in einem Kraftfahrzeug eingesetzt werden. Es ist aber auch möglich, die Schichten einzeln bereitzustellen und in Einzelteilen im Fahrzeug zu montieren. Dies bietet einerseits einen höheren Flexibilitätsgrad, was die Zusammenstellung des Verkleidungsbauteils angeht; es erhöht aber auch die Möglichkeiten des Recycling, weil das Verkleidungsbauteil ohne Schwierigkeiten in seine verschiedenen Bestandteile wieder zerlegt werden kann.

Zusammengefasst löst die Erfindung die widerstreitenden Interessen zwischen hoher Schalldämmung und guter Trittfestigkeit, indem ein akustisches Feder-Masse-System bereitgestellt wird; in dem als weiche Feder das in den Hohlräumen der Kassettenprofilschicht vorhandene Luftpolster verwendet wird, während die Trittfestigkeit durch die Wabenstruktur der Kassettenprofilschicht erzielt wird. Durch die weiche Feder ist nur eine relativ geringe Masse notwendig, um eine gute Schallisolation zu erreichen, wobei die Kassettenprofilschicht auch zur Masse beitragen kann. Durch dünne Vliesschichten oder andere weiche Schichten zwischen der Kassettenprofilschicht und der Nutzschicht kann der Trittkomfort eingestellt werden. Eine weitere dünne Vliesschicht oder ähnliche weiche Schicht auf der Unterseite der Kassettenprofilschicht dient dem gleichen Zweck und verhindert Anschlussgeräusche des Verkleidungsbauteils auf der Karosserie, beispielsweise dem Bodenblech.

Die Erfindung ist im Folgenden anhand bevorzugter Ausführungen weiter erläutert. In den Figuren zeigen:
- Fig. 1: eine schematische Schnittdarstellung durch ein Verkleidungsbauteil gemäß der Erfindung;
- Fig. 2: eine schematische Schnittdarstellung durch ein Verkleidungsbauteil gemäß einer alternativen Ausführung der Erfindung;
- Fig. 3, 4 und 5: schematische Schnittdarstellungen durch alternative Ausführungen der Nutzschicht.

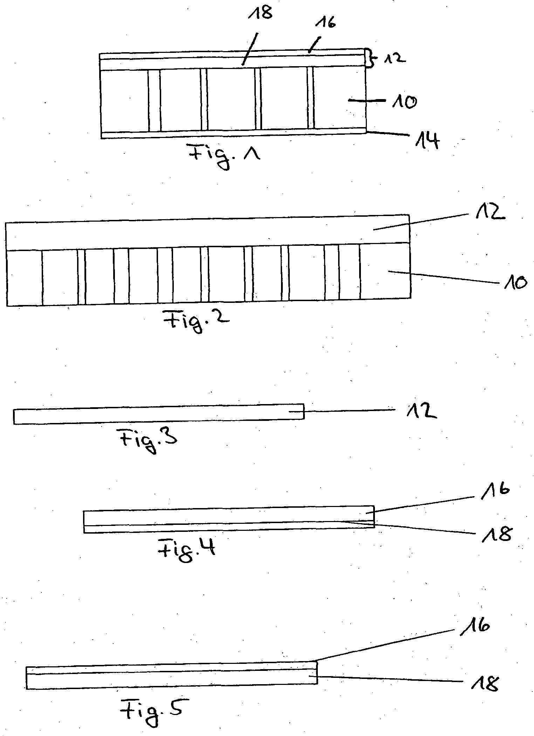

Fig. 1 zeigt eine schematische Schnittdarstellung durch ein Verkleidungsbauteil gemäß der Erfindung. Das Verkleidungsbauteil dient in der gezeigten Ausführung als ein trittfester, leichter, akustisch wirksamer Bodenbelag für ebene und gering verformte Bodengruppen eines Kraftfahrzeuges. Das erfindungsgemäße Verkleidungsbauteil kann jedoch auch im Bereich von Ablagen und Kofferraumböden sowie Kofferbodenabdeckung und anderen Innverkleidungsteilen Einsatz finden.

In der gezeigten Ausführung umfasst das Verkleidungsbauteil eine Kassettenprofilschicht 10, eine zweilagige Nutzschicht 12 und eine Abdeckschicht 14. Die Kassettenprofilschicht 10 wird beispielsweise durch eine getränkte Papierwabe gebildet, vorzugsweise durch ein ausgerüstetes Papierprofil, das gegen Verschmutzung und Eindringen von Feuchtigkeit mit Harz, Latex, eine Emulsion, einem Öl, Wachs oder Bitumen getränkt ist. Es können auch thermoplastische oder duroplastische Profile verwendet werden.

Die die Seitenwände der einzelnen Hohlräume oder Waben der Kassettenprofilschicht 10 trennenden Wände sind luftundurchlässig und weisen keinerlei Durchgänge, Verbindungskanäle oder dergleichen auf.

Die Nutzschicht 12 kann zweilagig ausgestaltet sein, wie in Fig. 1 gezeigt, mit einer Deckschicht 16 mit offenem oder geschlossenem textilem Aufbau oder geschlossenem thermoplastischem Aufbau, z.B. aus TPO oder TPE, und mit einer Zwischenschicht 18 aus einem Mischfaser- oder Reinfaservlies, das thermoplastisch- oder harzgebunden sein kann.

Auf der gegenüberliegenden Auf- oder Anlageseite des Verkleidungsbauteils ist die Abdeckschicht 14 angeordnet, insbesondere ein Abdeckvlies, das luftdurchlässig ist und die zu der Auf- oder Anlageseite des Verkleidungsbauteils hin offenen Hohlräume der Kassettenprofilschicht nicht luftdicht abschließt.

In Fig. 2 ist eine alternative Ausgestaltung des Verkleidungsbauteils mit nur einer Kassettenprofilschicht 10 und einer Nutzschicht 12 dargestellt. In diese Ausführung ist die Nutzschicht 12 einlagig und besteht z.B. aus einem elastomeren Werkstoff. Die Abdeckschicht 14 ist für die akustische Wirkung nicht notwendig und kann daher weggelassen werden.

Unabhängig davon, ob die Abdeckschicht 14 vorgesehen ist oder nicht, ist das erfindungsgemäße Verkleidungsbauteil so ausgestaltet, dass es mit den Unterkanten der die Hohlräume der Kassettenprofilschicht trennenden Wände direkt, oder über Abdeckschicht 14, an der Karosserie des Fahrzeugs anliegt. Eine laterale Luftströmung in diesem Bereich ist nicht vorgesehen, sondern die Feder des Feder-Masse-Systems wird im Wesentlichen nur durch die in den Hohlräumen eingeschlossene Luft gebildet.

Die Fig. 3 bis 5 zeigen verschiedene Ausgestaltungen der Nutzschicht, wobei Fig. 3 eine einlagige Nutzschicht 12 aus einem elastomeren Werkstoff wiedergibt; Fig. 4 zeigt eine zweilagige Nutzschicht mit einer textilen Deckschicht 16 und einer darunterliegenden Dichtfolie als Zwischenschicht 18; während Fig. 5 eine zweilagige Nutzschicht mit einer thermoplastischen Deckfolie 16 und einem darunter liegenden Vlies als Zwischenschicht 18 zeigt. Der textile Werkstoff und das Vlies können ein angenehmes Trittgefühl erzeugen und haben den zusätzlichen Nutzen, dass herabfallende Gegenstände oder Schuhabsätze den Aufbau nicht durchstoßen können. Die Nutzschicht ist in der bevorzugten Ausführung luftdicht und schließt das Verkleidungsbauteil nach oben luftdicht ab. Wenn die Kassettenprofilschicht selbst eine die Nutzseite luftdicht abschließende Oberfläche hat, dann kann die Nutzschicht auch luftdurchlässig sein.

Ein Verkleidungsbauteil mit einer thermoplastischen oder thermoplastisch ausgerüsteten Kassettenprofilschicht kann durch einen Thermoformungsprozess in die gewünschte Form gebracht werden, wobei die Kassettenprofilschicht nur innerhalb von Grenzen verformt werden sollte. Das Verkleidungsbauteil kann beispielsweise dadurch hergestellt werden, dass z.B. eine Papierwabenstruktur mit Harz getränkt, beträufelt, besprüht oder auf ähnliche Weise imprägniert wird, wenigstens die Nutzschicht auf die Wabenstruktur aufgebracht wird und der Verbund erwärmt und geformt wird. Beim Auskühlen erstarrt das Verkleidungsbauteil in der gewünschten Form. Kassettenprofilschichten, die polymerisierte Harze verwenden, können z.B. durch ein Pressverfahren geformt und an die zugehörige Auf- oder Anlagefläche angepasst werden.

Die Abdeckschicht 14 schützt die Kassettenprofilschicht gegen das Eindringen von Fremdkörpern und Feuchtigkeit. Ferner trennt sie das Verkleidungsbauteil von der Auf- oder Anlagefläche und verhindert Anschlussgeräusche zur Auf- bzw. Anlagefläche, wie Reib- und/oder Klappergeräusche.

Erfindungsgemäß dient die Kassettenprofilschicht nicht lediglich als Trägerstruktur, zur Aufnahme von Schaumstoff oder Granulat oder als Trittverstärkung in einem hinterschäumten Bodenbelag oder nur als Abstandshalter, sondern sie bildet zusätzlich zu ihrer Trägerfunktion in Verbindung mit der Nutzschicht ein akustisches Element. Die in der Kassettenprofilschicht eingeschlossene Luftsäule als Feder bildet in Verbindung mit der Nutzschicht im akustischen Sinne ein leichtes, wirksames Masse-Federsystem. Zusätzlich erzeugt das Profil die gewünschte Trittfestigkeit.

Die in der vorstehenden Beschreibung, den Ansprüchen und den Figuren offenbarten Merkmale können sowohl einzeln als auch in beliebiger Kombination für die Verwirklichung der Erfindung in ihren verschiedenen Ausgestaltungen von Bedeutung sein.

## Patentansprüche

1. Verkleidungsbauteil für den Innenraum eines Kraftfahrzeugs, insbesondere Verkleidungsbauteil für die Bodenfläche eines Kraftfahrzeuges, mit einer Kassettenprofilschicht (10), in der eine Vielzahl von Hohlräumen gebildet sind, die zu einer Auf- oder Anlageseite des Verkleidungsbauteils hin offen und zu einer gegenüberliegenden Nutzseite hin luftdicht abgeschlossen sind, und einer aufliegenden Nutzschicht (12), wobei die Hohlräume der Kassettenprofilschicht (10) luftgefüllt sind und wobei die in der Kassettenprofilschicht (10) eingeschlossenen Luftsäulen in Verbindung mit
(i) einer luftdichten Nutzschicht (12) oder
(ii) einer die Nutzseite luftdicht abschließenden Oberfläche der Kassettenprofilschicht
ein akustisches Feder-Masse-System bilden, und wobei
die Hohlräume der Kassettenprofilschicht durch Wände getrennt sind, **dadurch gekennzeichnet, dass** das Verkleidungsbauteil derart gestaltet ist, dass es mit den unteren Kanten der Trennwände direkt oder über eine luftdurchlässige Abdeckschicht an Karrosserieblechen eines Kraftfahrzeugs anlegbar ist, wobei zwischen den einzelnen Hohlräumen der Kassettenprofilschicht keine oder im Wesentlichen keine laterale Luftströmung entsteht.

2. Verkleidungsbauteil nach Anspruch 1, **dadurch gekennzeichnet, dass** die Hohlräume der Kassettenprofilschicht (10) nach Art einer Wabenstruktur durch Wände getrennt sind, die im Wesentlichen senkrecht zur Auf- oder Anlagefläche des Verkleidungsbauteils verlaufen und eine Schallausbreitung parallel zur Auf- oder Anlagefläche weitgehend verhindern.

3. Verkleidungsbauteil nach Anspruch 1 oder 2, **dadurch gekennzeichnet, dass** die die Hohlräume der Kassettenprofilschicht (10) nur Luft enthalten.

4. Verkleidungsbauteil nach einem der vorangehenden Ansprüche, **dadurch gekennzeichnet, dass** die Nutzschicht (12) direkt oder über eine elastische Zwischenschicht (18) mit der Kassettenprofilschicht (10) fest oder lösbar verbunden ist.

5. Verkleidungsbauteil nach einem der vorangehenden Ansprüche, **dadurch gekennzeichnet, dass** die Hohlräume der Kassettenprofilschicht auf der Nutzseite durch die Nutzschicht luftdicht abgeschlossen sind.

6. Verkleidungsbauteil nach einem der vorangehenden Ansprüche, **dadurch gekennzeichnet, dass** die Kassettenprofilschicht (10) aus einem schubsteifen Material, wie thermoplastischen oder duroplastischen Folien oder aus einem ausgerüsteten Papier, insbesondere einem getränkten Papier, hergestellt ist.

7. Verkleidungsbauteil nach Anspruch 6, **dadurch gekennzeichnet, dass** die Kassettenprofilschicht (10) aus einem ausgerüsteten Papier hergestellt ist, das mit einem Harz, Latex, einem Öl, Wachs oder Bitumen getränkt und/oder beschichtet ist.

8. Verkleidungsbauteil nach einem der vorangehenden Ansprüche, **dadurch gekennzeichnet, dass** die Nutzschicht (12) aus einem Elastomer-Werkstoff, einem Textilwerkstoff, der wenigstens einseitig porendicht beschichtet ist, oder einem mit einer thermoplastischen Folie versehenen Vlies hergestellt ist.

9. Verkleidungsbauteil nach einem der vorangehenden Ansprüche, **gekennzeichnet durch** eine Abdeckschicht (14) aus einem luftdurchlässigen Material, insbesondere einem Vlies, die auf die Auf- oder Anlageseite der Kassettenprofilschicht aufgebracht ist.

10. Verkleidungsbauteil nach einem der vorangehenden Ansprüche, **dadurch gekennzeichnet, dass** es ohne Verwendung einer zusätzlichen Entkopplungsschicht, insbesondere ohne Verwendung von Schaumstoff hergestellt ist.

11. Verkleidungsbauteil nach einem der vorangehenden Ansprüche, **dadurch gekennzeichnet, dass** es nur aus der Kassettenprofilschicht (10) und der Nutzschicht (12) aufgebaut ist.

12. Verkleidungsbauteil nach einem der Ansprüche 1 bis 9, **dadurch gekennzeichnet, dass** es nur aus der Kassettenprofilschicht (10), der Nutzschicht (12) und der Abdeckschicht (14) aufgebaut ist.

13. Verkleidungsbauteil nach einem der vorangehenden Ansprüche, **dadurch gekennzeichnet, dass** die Hohlräume der Kassettenprofilschicht durch luftundurchlässige Wände getrennt sind, so dass keine laterale Luftströmung zwischen den Hohlräumen durch diese Wände hindurch erfolgt.

14. Verwendung des Verkleidungsbauteils nach einem der vorangehenden Ansprüche zur Verkleidung von Bodenblechen oder anderen Karosserieblechen in dem Innenraum eines Kraftfahrzeugs, wobei das Verkleidungsbauteil derart an die Boden- oder anderen Karosseriebleche des Kraftfahrzeugs angelegt wird, dass die Nutzschicht zum Innenraum des Kraftfahrzeugs weist und die Trennwände der Kassettenprofilschicht direkt oder über eine luftdichte Abdeckschicht an den Boden- oder anderen Karosserieblechen des Kraftfahrzeugs anliegen, so dass zwischen den einzelnen Hohlräumen der Kassettenprofilschicht keine oder im Wesentlichen keine laterale Luftströmung entsteht.

## Claims

1. A trim component for the interior of a motor vehicle, in particular a trim component for the floor surface of a motor vehicle, including a cassette profile layer (10), in which a plurality of cavities are formed, which are open towards a supporting or abutting side of the trim component, and a supported use layer (12), wherein the cavities of the cassette profile layer (10) are filled with air and wherein the columns of air enclosed in the cassette profile layer (10) in combination with
(i) an airtight use layer (12) or
(ii) a surface of the cassette profile layer sealing the use side in an airtight manner
form an acoustic spring-mass system, wherein the cavities of the cassette profile layer (10) are separated by walls, **characterized in that** the trim component is configured so that the bottom edges of the separating walls can rest on the vehicle body, either directly or via an air permeable cover layer wherein there is no or substantially no lateral exchange of air between the individual cavities of the cassette profile layer.

2. The trim component according to Claim 1, **characterized in that** the cavities of the cassette profile layer (10) are separated in the manner of a honeycomb structure by walls which run substantially perpendicularly to the supporting or abutting surface of the trim component and largely prevent sound propagation parallel to the supporting or abutting surface.

3. The trim component according to Claim 1 or 2, **characterized in that** the cavities of the cassette profile layer (10) contain only air.

4. The trim component according to one of the preceding claims, **characterized in that** the use layer (12) is connected directly or via an elastic intermediate layer (18) with the cassette profile layer (10).

5. The trim component according to one of the preceding claims, **characterized in that** the cavities of the cassette profile layer are sealed in an airtight manner on a use surface by the use layer.

6. The trim component according to one of the preceding claims, **characterized in that** the cassette profile layer (10) is produced from a shear-resistant material, such as thermoplastic or duroplastic foils or from a finished paper, in particular an impregnated paper.

7. The trim component according to Claim 6, **characterized in that** the cassette profile layer (10) is produced from a finished paper which is impregnated and/or coated with a resin, latex, an oil, wax or bitumen.

8. The trim component according to one of the preceding claims, **characterized in that** the use layer (12) is produced from an elastomer material, a textile material which is coated at least on one side so as to be imperviously sealed, or from a non-woven material provided with a thermoplastic foil.

9. The trim component according to one of the preceding claims, **characterized by** a cover layer (14) of a material, permeable to air, in particular a non-woven material, which is applied onto the supporting or abutting side of the cassette profile layer.

10. The trim component according to one of the preceding claims, **characterized in that** it is produced without the use of an additional decoupling layer, in particular without the use of foam.

11. The trim component according to one of the preceding claims, **characterized in that** it is constructed only from the cassette profile layer (10) and the use layer (12).

12. The trim component according to one of Claims 1 to 9, **characterized in that** it is constructed only from the cassette profile layer (10), the use layer (12) and the cover layer (14).

13. The trim component according to one of the preceding claims, wherein the cavities of the cassette profile layer are separated by air-impermeable walls so that there is no lateral air flow between the cavities through said walls.

14. Use of a trim component according to one of the preceding claims as a trim of a floor panel or other body panel in the interior of a vehicle, wherein the trim component is applied to the bottom or other body panel of the vehicle in such a way that the use layer faces the interior of the vehicle and the separating walls of the cassette profile layer abut against the floor or other body panel of the vehicle directly or via an air impermeable cover layer so that there is no or substantially no lateral air stream between the individual cavities of the cassette profile layer.

## Revendications

1. Elément de carénage pour l'intérieur d'un véhicule motorisé, plus particulièrement un élément de carénage pour la surface du plancher d'une véhicule motorisé, avec une couche à profil en caissons (10), dans laquelle une pluralité d'espaces creux sont formés, qui sont ouverts en direction d'un côté d'appui de l'élément de carénage et qui sont fermés de manière étanche en direction d'un côté utile opposé, et une couche utile (12) posée, les espaces creux de la couche à profil en caissons (10) étant remplis d'air et les colonnes d'air incluses dans la couche à profil en caissons (10) formant, en liaison avec
(i) une couche utile (12) étanche à l'air ou
(ii) une surface de la couche à profil en caissons fermant de manière étanche le côté utile,
un système ressort-masse acoustique et
les espaces creux de la couche à profil en caissons sont séparés par des parois, **caractérisé en ce que** l'élément de carénage est conçu de façon à ce qu'il puisse être appuyé, avec les arêtes inférieures des cloisons, directement ou par l'intermédiaire d'une couche de recouvrement perméable à l'air, contre des tôles de carrosserie d'un véhicule motorisé, aucun ou presque aucun écoulement d'air latéral n'apparaissant entre les différents espaces creux de la couche à profil en caissons.

2. Elément de carénage selon la revendication 1, **caractérisé en ce que** les espaces creux de la couche à profil en caissons (10) sont séparées, à la manière d'une structure en nid d'abeilles, par des parois qui s'étendant globalement perpendiculairement à la surface d'appui de l'élément de carénage et empêchent largement une propagation du son parallèlement à la surface d'appui.

3. Elément de carénage selon la revendication 1 ou 2, **caractérisé en ce que** les espaces creux de la couche à profil en caissons (10) contiennent uniquement de l'air.

4. Elément de carénage selon l'une des revendications précédentes, **caractérisé en ce que** la couche utile (12) est reliée de manière fixe ou amovible, directement ou par l'intermédiaire d'une couche intermédiaire élastique (18), avec la couche à profil en caissons (10).

5. Elément de carénage selon l'une des revendications précédentes, **caractérisé en ce que** les espaces creux de la couche à profil en caissons sont fermés de manière étanche à l'air sur le côté utile par la couche utile.

6. Elément de carénage selon l'une des revendications précédentes, **caractérisé en ce que** la couche à profil en caissons (10) est constituée d'un matériau résistant au cisaillement, comme des films thermoplastiques ou thermodurcissables, ou d'un papier équipé, plus particulièrement d'un papier imprégné.

7. Elément de carénage selon la revendication 6, **caractérisé en ce que** la couche à profil en caissons (10) est constituée d'un papier équipé, qui est imprégné et/ou revêtu d'une résine, de latex, d'une huile, de cire ou de bitume.

8. Elément de carénage selon l'une des revendications précédentes, **caractérisé en ce que** la couche utile (12) est constituée d'un matériau élastomère, d'un matériau textile, qui est revêtu au moins d'un côté de pores fermés, ou d'une toison munie d'un film thermoplastique.

9. Elément de carénage selon l'une des revendications précédentes, **caractérisé par** une couche de recouvrement (14) en matériau perméable à l'air, plus particulièrement d'une toison, qui est appliquée sur le côté d'appui de la couche à profil en caissons.

10. Elément de carénage selon l'une des revendications précédentes, **caractérisé en ce qu'**il est fabriqué sans l'aide d'une couche de découplage supplémentaire, plus particulièrement sans l'aide d'une mousse.

11. Elément de carénage selon l'une des revendications précédentes, **caractérisé en ce qu'**il est constitué uniquement d'une couche à profil en caissons (10) et de la couche utile (12).

12. Elément de carénage selon l'une des revendications 1 à 9, **caractérisé en ce qu'**il est constitué uniquement d'une couche à profil en caissons (10), de la couche utile (12) et de la couche de recouvrement (14).

13. Elément de carénage selon l'une des revendications précédentes, **caractérisé en ce que** les espaces creux de la couche à profil en caissons sont séparés par des parois imperméables à l'air, de façon à ce qu'aucun écoulement d'air latéral n'ait lieu entre les espaces creux entre les espaces creux à travers ces parois.

14. Utilisation de l'élément de carénage selon l'une des revendications précédentes pour le carénage de tôles de fond ou d'autres tôles de carrosserie à l'intérieur d'un véhicule motorisé, l'élément de carénage étant appuyé contre les tôles de fond ou d'autres tôles de carrosserie du véhicule motorisé de façon à ce que la couche utile soit orientée vers l'intérieur du véhicule motorisé et les cloisons de la couche à profil en caissons s'appuient, directement ou par l'intermédiaire d'une couche de recouvrement étanche à l'air contre les tôles de fond ou d'autres tôles de carrosserie du véhicule motorisé, de façon à ce qu'aucun ou presque aucun écoulement d'air latéral n'apparaisse entre les différents espaces creux de la couche à profil en caissons.
